Europäisches Patentamt

European Patent Office

Office européen des brevets

(11) Veröffentlichungsnummer: **0 360 739**
**A1**

## (12) EUROPÄISCHE PATENTANMELDUNG

(21) Anmeldenummer: 89810644.8

(22) Anmeldetag: 31.08.89

(51) Int. Cl.⁵: **F 16 D 1/12**
**F 16 H 53/02**

(30) Priorität: 07.09.88 CH 3352/88

(43) Veröffentlichungstag der Anmeldung:
28.03.90 Patentblatt 90/13

(84) Benannte Vertragsstaaten:
CH DE ES FR GB IT LI NL

(71) Anmelder: **SIG Schweizerische Industrie-Gesellschaft**
**CH-8212 Neuhausen am Rheinfall (CH)**

(72) Erfinder: **Dietzsch, Claudius**
**Zwinglistrasse 801**
**CH-8260 Stein am Rhein (CH)**

**Arpagaus, Anton**
**Hofstettenstrasse 16**
**CH-8212 Neuhausen am Rheinfall (CH)**

**Eschbach, Franz**
**Haus Nr. 119**
**D-7883 Görwihl (CH)**

(74) Vertreter: **Münch, Otto et al**
**Patentanwalts-Bureau Isler AG Walchestrasse 23**
**CH-8006 Zürich (CH)**

(54) **Einstellbare Verbindung eines Drehkörpers mit einer Welle.**

(57) Auf der Welle (1) ist eine zweiteilige Nabe (2) aufgesetzt. Die beiden Nabensegmente (3, 4) sind miteinander verschraubt, so dass die Nabe (2) reibschlüssig mit der Welle (1) verbunden ist. Ein radialer Stift (7) greift zur exakten Positionierung der Nabe (2) in ein Sackloch in der Welle (1) ein. Stirnseitig ist an die Nabe (2) eine Kurvenscheibe (10) in Umfangsrichtung angeschraubt. Auf der Nabe (2) ist ein Massstab (14) und auf der Scheibe (10) ein Strich (15) angebracht. Damit lässt sich die Positionierung der Scheibe (10) auf der Nabe (2) ablesen und reproduzieren.

Fig. 1

EP 0 360 739 A1

**Beschreibung**

## Einstellbare Verbindung eines Drehkörpers mit einer Welle

Eine Verbindung eines Drehkörpers mit einer Welle gemäss Oberbegriff des Anspruchs 1 ist aus der US-A-3 490 303 bekannt. Auf einer Welle ist eine Nabe aufgesetzt und durch einen Keil in Umfangsrichtung formschlüssig mit der Welle verbunden. An die Nabe ist ein auf der Welle zentriertes Kettenrad durch achsparallele Schrauben angeschraubt. Die Schrauben sind durch Längsschlitze in der Nabe durchgesteckt. Nach Lösen der Schrauben kann das Kettenrad relativ zur Nabe und damit zur Welle verdreht werden. Damit kann die Phasenlage eingestellt werden.

Bei dieser Lösung wird die Keilverbindung sowohl zum Positionieren der Nabe in Umfangsrichtung als auch zum Uebertragen des Drehmomentes verwendet. Damit ergibt sich zwangsläufig ein gewisses Umfangsspiel. Eine präzise axiale Positionierung ist nicht möglich. Die Nabe kann nur axial auf die Welle aufgeschoben werden.

Der vorliegenden Erfindung liegt die Aufgabe zugrunde, eine Verbindung der eingangs genannten Art derart weiterzubilden, dass die Verbindung spielfrei ist, dass sie eine genaue axiale Positionierung ermöglicht, und dass die Nabe einfach zu montieren ist. Diese Aufgabe wird durch die kennzeichnenden Merkmale des Anspruchs 1 gelöst.

Wegen der kraftschlüssigen Verbindung zwischen Welle und Nabe wird das Formschlusselement von der Kraftübertragung entlastet und kann deshalb als einfacher Querstift ausgebildet werden, der auch die genaue axiale Positionierung der Nabe auf der Welle ermöglicht. Wegen der zweiteiligen Ausbildung der Nabe kann diese auf einer eingebauten Welle einfach radial montiert werden. Dadurch wird ein rasches Auswechseln ermöglicht. Wegen der direkt ablesbaren Drehstellung ist die Einstellung des Drehkörpers relativ zur Nabe jederzeit reproduzierbar.

Die zweiteilige Ausbildung eines Rings ist an sich aus der US-A-4 422 793 bekannt. Die Zweiteilung dient allerdings einem andern Zweck, nämlich der Montage des Rings in einer Umfangsnut, um axiale Kräfte übertragen zu können.

Aus der US-A-3 266 270 ist es an sich bekannt, bei einer im Winkel einstellbaren flexiblen Kupplung zwischen zwei Wellenenden die auf den Wellenenden sitzenden Naben mit je einem Querstift zu positionieren und die längsgeschlitzten Nabenansätze zum kraftschlüssigen Eingriff mit den Wellenenden zu spannen.

Aus der US-A-2 943 465 und der GB-A-162 211 ist es ferner bekannt, bei einstellbaren Verbindungen zwischen einer Welle und einem Drehkörper an einem Einstellglied eine Skala anzubringen, damit die Einstellung reproduzierbar ist.

Nachfolgend wird ein Ausführungsbeispiel der Erfindung anhand der Zeichnung erläutert. Darin zeigt:

Fig. 1 eine perspektivische Ansicht einer Kurvenscheibe mit einer Welle,

Fig. 2 eine Stirnansicht einer zweiten Ausführungsform einer Kurvenscheibe, und

Fig. 3 einen Schnitt längs der Linie III-III in Fig. 2.

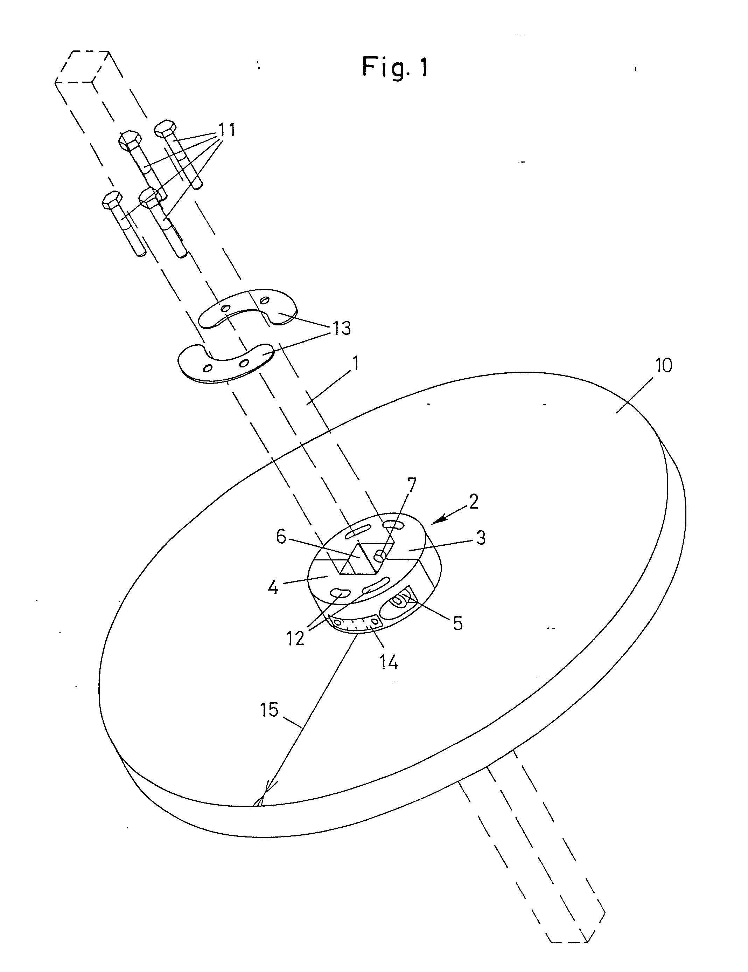

In Fig. 1 ist eine Vierkantwelle 1 strichliert dargestellt. Auf der Welle 1 ist eine Nabe 2 festgespannt. Die Nabe 2 ist längs einer die Achse der Welle 1 enthaltenden Ebene in zwei Ringsegmente 3, 4 unterteilt. Die beiden Segmente 3, 4 sind durch zur Achse 1 senkrechte InnensechskantSchrauben 5 zusammengespannt, so dass die Nabe 2 reibschlüssig mit der Welle 1 verbunden ist. Durch die axiale, die Welle 1 umgreifende Vierkantbohrung 6 ist die Verbindung zusätzlich in Umfangsrichtung formschlüssig. Zur exakten Positionierung der Nabe 2 auf der Welle 1 dient ein im Segment 3 sitzender, in eine radiale Sacklochbohrung in der Welle 1 eingreifender Stift 7. Stirnseitig ist an die Nabe 2 eine Kurvenscheibe 10 angeschraubt, so dass Nabe 2 und Scheibe 10 reibschlüssig in Umfangsrichtung einstellbar lösbar miteinander verbunden sind. Dazu durchgreifen vier achsparallele Sechskant-Schrauben 11 je zwei kreisbogenförmige Langlöcher 12 in den Segmenten 3, 4. Die Schrauben 11 werden in nicht dargestellte Gewindebohrungen in der Scheibe 10 eingeschraubt. Zwischen den Schraubenköpfen und den Segmenten 3, 4 werden halbmondförmige Unterlagsscheiben 13 eingesetzt. Zum Ablesen der eingestellten Position zwischen Nabe 2 und Scheibe 10 dient ein Massstab 14 am Umfang der Nabe 2, der mit einer Strichmarke 15 auf der Scheibe 10 zusammenwirkt. Statt der Strichmarke 15 kann auch eine Noniusskale vorgesehen werden, damit Zwischenwerte beim Ablesen besser interpoliert werden können. Zur Montage wird die Scheibe 10 mit den beiden Segmenten 3, 4 vormontiert und axial auf die Welle 1 aufgeschoben. Hierauf wird der Stift 7 in die in der Welle 1 bereits vorgebohrte Positionsbohrung gesetzt und die Schrauben 5 angezogen. Nach dem Einsetzen der Welle 1 wird die Scheibe 10 in Umfangsrichtung gegenüber der Nabe 2 eingestellt. Schliesslich werden die Schrauben 11 festgezogen. Die Demontage erfolgt in umgekehrter Reihenfolge.

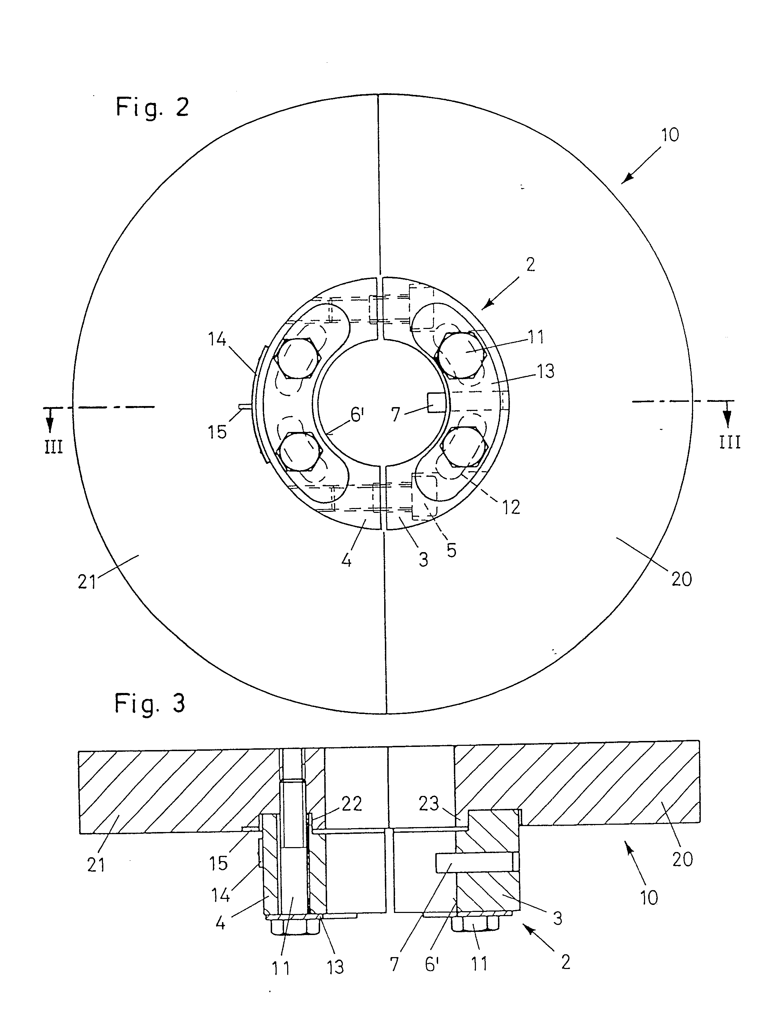

Die Ausführungsform nach Fig. 2 und 3 unterscheidet sich von jener nach Fig. 1 dadurch, dass die nicht dargestellte Welle und die Bohrung 6' kreiszylindrisch sind, und dass die Scheibe 10 längs einer die Achse der Welle enthaltenden Ebene in zwei Ringsegmente 20, 21 unterteilt ist. Die Bohrung 6' hat an ihrer der Scheibe 10 zugewandten Seite eine Abstufung 22, die halbzylindrische Ansätze 23 der Segmente 20, 21 umgreift und damit die Scheibe 10 auf der Nabe 2 zentriert und die Segmente 20, 21 gegeneinander spannt.

Zur Montage werden hier die beiden Scheibensegmente 20, 21 mit den beiden Segmenten 3, 4 vormontiert. Die beiden vormon tierten Teile werden radial auf die Welle aufgesetzt und mittels des Stiftes 7 im Stiftloch der Welle positioniert. Die Schrauben 5 werden leicht angezogen und die Scheibe 10 in Umfangsrichtung eingestellt. Hierauf werden zunächst die Schrauben 11 leicht, dann die Schrauben 5 ganz und schliesslich die Schrauben 11 ganz angezogen.

Der Stift 7 dient lediglich zur exakten Positionierung und braucht keine Drehmomente zu übertragen. Er kann daher dünn ausgebildet werden. Die Positionierbohrung in der Welle wird bereits bei der Herstellung oder der Vormontage gebohrt. Wegen der Einstellbarkeit der Scheibe 10 relativ zur Nabe 2 ist nach der Einstellung keine Bohrarbeit mehr nötig. In der Maschine fallen deshalb keine Späne an. Sämtliche Schrauben sind radial zugänglich und können mit üblichen Werkzeugen angezogen und gelöst werden. Das gleiche Montage- und Einstellprinzip ist sowohl für einteilige als auch für zweiteilige Kurvenscheiben möglich. Die eingestellte Position ist jederzeit reproduzierbar, wenn der auf dem Massstab 14 abgelesene Wert festgehalten wird. Die Einstellung kann auch später ohne Nacharbeit an der Welle geändert werden. Auch ein Austausch der Kurvenscheibe 10 gegen eine andere Scheibe ist ohne Nacharbeit an der Welle möglich.

**Patentansprüche**

1. Einstellbare Verbindung eines Drehkörpers (10) mit einer Welle (1), umfassend eine auf die Welle (1) aufgesetzte, mit einem Formschlusselement in Umfangsrichtung formschlüssig mit der Welle (1) verbundene Nabe (2), wobei der Drehkörper (10) mittels Schrauben (11), die bogenförmige Langlöcher (12) durchgreifen, in Umfangsrichtung einstellbar lösbar mit der Nabe (2) verbunden ist, und wobei auf der Nabe (2) und dem Drehkörper (10) je eine Einrichtung (14, 15) zum Ermitteln der relativen Drehstellung zwischen Nabe (2) und Drehkörper (10) angebracht ist, dadurch gekennzeichnet, dass die Nabe (2) aus zwei getrennten Ringsegmenten (3, 4) besteht, die beidseits der Wellenachse über zur Wellenachse senkrechte Schrauben (5) zum kraftschlüssigen Eingriff der Nabe (2) mit der Welle (1) zusammengespannt sind, dass das Formschlusselement ein die Nabe (2) durchgreifender und in eine radiale Bohrung der Welle (1) eingreifender Stift (7) ist, welcher die Nabe (2) auch axial relativ zur Welle (1) positioniert, und dass die Einrichtung (14, 15) zum Ermitteln der relativen Drehstellung zum direkten Ablesen dieser Drehstellung ausgebildet ist.

2. Verbindung nach Anspruch 1, dadurch gekennzeichnet, dass die Einrichtung (14, 15) eine Masseinteilung (14) am Drehkörper (10) oder an der Nabe (2) umfasst.

3. Verbindung nach Anspruch 2, dadurch gekennzeichnet, dass die Masseinteilung (14) mit einem Strich (15) oder mit einer Nonius-Skala an der Nabe (2) bzw. dem Drehkörper (10) zusammenwirkt.

4. Verbindung nach einem der Ansprüche 1 bis 3, dadurch gekennzeichnet, dass der Drehkörper eine Kurvenscheibe (10) ist.

5. Verbindung nach Anspruch 4, dadurch gekennzeichnet, dass die Kurvenscheibe (10) längs einer die Achse der Welle (1) enthaltenden Ebene in zwei Teile (20, 21) geteilt ist.

6. Verbindung nach Anspruch 5, dadurch gekennzeichnet, dass die Nabe (2) eine gegenüber dem Querschnitt der Welle (1) vergrösserte kreiszylindrische Bohrung (22) hat, die einen zylindrischen Ansatz (23) der Kurvenscheibe umgreift und damit die beiden Scheibenteile (20, 21) gegeneinander spannt.

7. Verbindung nach einem der Ansprüche 1 bis 6, dadurch gekennzeichnet, dass der Drehkörper (10) auf der Nabe (2) zentriert ist.

# Fig. 1

Fig. 2

Fig. 3

Europäisches
Patentamt

Nummer der Anmeldung

EP  89 81 0644

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | US-A-3 490 303  (ROSENBERG) <br> * Insgesamt * <br> --- | 1-3 | F 16 D   1/12 <br> F 16 H  53/02 |
| D,Y | GB-A-  162 211  (WILLCOX & GIBBS) <br> * Insgesamt * <br> --- | 1-3 | |
| D,A | US-A-2 943 465  (MUSSER) <br> * Insgesamt * <br> --- | 2-4 | |
| A | GB-A-1 026 964  (ZAHORANSKY) <br> * Insgesamt * <br> --- | 4,5,7 | |
| A | GB-A-  556 389  (EVANS) <br> * Seite 2; Figur 5 * <br> ----- | 6,7 | |

RECHERCHIERTE SACHGEBIETE (Int. Cl.5)

F 16 D   1/00
F 16 H

Der vorliegende Recherchenbericht wurde für alle Patentansprüche erstellt

| Recherchenort | Abschlußdatum der Recherche | Prüfer |
|---|---|---|
| DEN HAAG | 27-11-1989 | BALDWIN D.R. |